# FASCICULE DE BREVET EUROPEEN

(11) **EP 2 593 271 B1**
(45) Date de publication et mention de la délivrance du brevet: **24.05.2017**
(21) Numéro de dépôt: 11744039.6
(22) Date de dépôt: 01.07.2011
(51) Int. Cl.: B24B 1/00, B24B 9/14, B24B 27/00, G02C 7/00

(54) **PROCÉDÉ DE DÉTOURAGE D'UNE LENTILLE OPHTALMIQUE DE LUNETTES COMPORTANT UN FILM DE REVÊTEMENT**
VERFAHREN ZUM SCHNEIDEN EINER BRILLENGLASLINSE MIT EINEM BESCHICHTUNGSFILM
METHOD FOR TRIMMING AN OPHTHALMIC EYEGLASS LENS COMPRISING A COATING FILM

(30) Priorité: 13.07.2010 FR 1002955
(43) Date de publication de la demande: 22.05.2013
(73) Titulaire: Essilor International (Compagnie Générale d'Optique), 94220 Charenton-Le-Pont (FR)
(72) Inventeur: LEMAIRE, Cédric, 94220 Charenton-Le-Pont (FR); BEGON, Cedric, 94220 Charenton-Le-Pont (FR); BARANTON, Konogan, 94220 Charenton-Le-Pont (FR); HADDADI, Ahmed, 94220 Charenton-Le-Pont (FR); SZYMANSKI, Patrice, 94220 Charenton-Le-Pont (FR); POIRRIER, Gerard, 94220 Charenton-Le-Pont (FR)
(74) Mandataire: Chauvin, Vincent
(86) Numéro de dépôt international: PCT/FR2011/000386
(87) Numéro de publication internationale: WO 2012/007654

(56) Documents cités:
- WO-A1-2007/128903
- WO-A1-2008/043910

## Description

### DOMAINE TECHNIQUE AUQUEL SE RAPPORTE L'INVENTION

La présente invention concerne de manière générale le détourage des lentilles ophtalmiques, et plus particulièrement un procédé de détourage d'une lentille ophtalmique revêtue d'un film.

### ARRIÈRE-PLAN TECHNOLOGIQUE

Un procédé de détourage d'une lentille ophtalmique est par exemple connu du document WO 2007/128903.

Certaines lentilles ophtalmiques sont munies sur l'une de leurs faces d'une couche de revêtement se présentant sous la forme d'un film rapporté sur le substrat de la lentille, par exemple collé sur ce substrat.

Ces films assurent un meilleur confort pour le porteur et de meilleures performances de la lentille.

L'obtention d'une telle lentille ophtalmique munie d'un film de revêtement et prête à être montée dans la monture choisie par le porteur, c'est-à-dire détourée selon le contour adapté au montage des lentilles sur cette monture, nécessite actuellement la réalisation de nombreuses étapes délicates à mettre en oeuvre.

En effet, il n'est pas possible de détourer de manière classique, à l'aide d'une meule, la lentille munie de son film. Celui-ci est fragile et subirait lors d'un tel détourage des décollements et/ou des délaminages, c'est-à-dire une séparation des différentes strates du film, inacceptables.

### OBJET DE L'INVENTION

Afin de remédier aux inconvénients précités de l'état de la technique, la présente invention propose un procédé de détourage d'une lentille ophtalmique de lunettes tel que décrit dans la revendication 1.

Ce procédé autorise le détourage direct de la lentille munie de son film de revêtement. Ce film de revêtement peut être monocouche ou multicouche et présenter une structure continue ou microstructurée. Il est fixé de manière temporaire ou permanente sur la face correspondante de la lentille. Cette face de la lentille peut en outre présenter d'autres traitements de surface sous la forme de couches de revêtement.

En effet, l'étape a) est réalisée à l'aide d'un outil de découpe différent de l'outil de taillage du type meule ou fraise utilisé à l'étape b), choisi pour ne pas provoquer l'apparition de défauts de cohésion entre le film et le substrat ou entre différentes parties du film, en particulier, des décollements et/ou des délaminages du film de revêtement.

En outre, lors de l'étape a), la lentille est découpée sur au moins l'épaisseur du film selon un contour réduit fermé calculé en fonction du contour souhaité pour la lentille de manière à ce que ce contour réduit soit inclus dans le contour souhaité, à une distance déterminée de ce contour souhaité supérieure à une valeur seuil.

Lors de l'étape b), le contour souhaité selon lequel la lentille est usinée est ainsi plus large que le contour réduit selon lequel le film de revêtement est découpé dans l'étape a). De cette façon, la partie centrale utile du film de revêtement n'est pas découpée lors de cette étape b), ce qui évite un décollement ou un délaminage du film.

Ce procédé de détourage limite les manipulations du film de revêtement et du substrat, ce qui est simple et rapide pour l'opérateur.

En outre, le positionnement du film de revêtement par rapport au substrat de la lentille est précis et le rendu esthétique de la lentille obtenue est ainsi satisfaisant. La grande précision du positionnement du film est particulièrement avantageuse dans le cas de films qui présentent des propriétés non uniformes (variant dans l'espace) et qui doivent donc être très précisément positionnés sur la lentille. C'est le cas par exemple de films de revêtement à variation d'indice optique.

La tenue et la finition du film de revêtement sur la base de la lentille est ainsi amélioré.

Selon une autre caractéristique avantageuse et non limitative du procédé selon l'invention, lors de l'étape c), on procède à des opérations de biseautage et/ou de rainurage et/ou de chanfreinage du substrat de la lentille.

La préparation de la lentille pour son montage dans la monture de lunettes choisie par le porteur est ainsi rapide et aisée.

Il est possible, sans sortir du cadre de l'invention, de réaliser l'étape b) après l'étape a) ou, inversement, l'étape a) après l'étape b), ou encore de réaliser au moins une partie des étapes a) et b) simultanément.

D'autres caractéristiques avantageuses et non limitatives du procédé selon l'invention sont décrites dans les revendications 5 à 12.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- les figures 1A, 1B et 1C montrent des vues schématiques en coupe de la lentille ophtalmique au cours de différentes étapes successives de son détourage selon un premier mode de réalisation du procédé conforme à l'invention,
- les figures 2A, 2B et 2C montrent des vues schématiques en coupe de la lentille ophtalmique au cours de différentes étapes successives de son détourage selon un deuxième mode de réalisation du procédé conforme à l'invention,
- la figure 3 est une vue schématique de dessus de la lentille représentée sur la figure 1B,
- la figure 4 est une vue schématique en perspective d'un dispositif de meulage utilisé pour mettre en oeuvre le procédé selon l'invention.

Dans la description qui suit, les références numériques désignant des éléments relatifs à un même mode de réalisation sont séparées par des virgules, tandis que les références numériques désignant des éléments relatifs aux différents modes de réalisations sont séparées par des point-virgules.

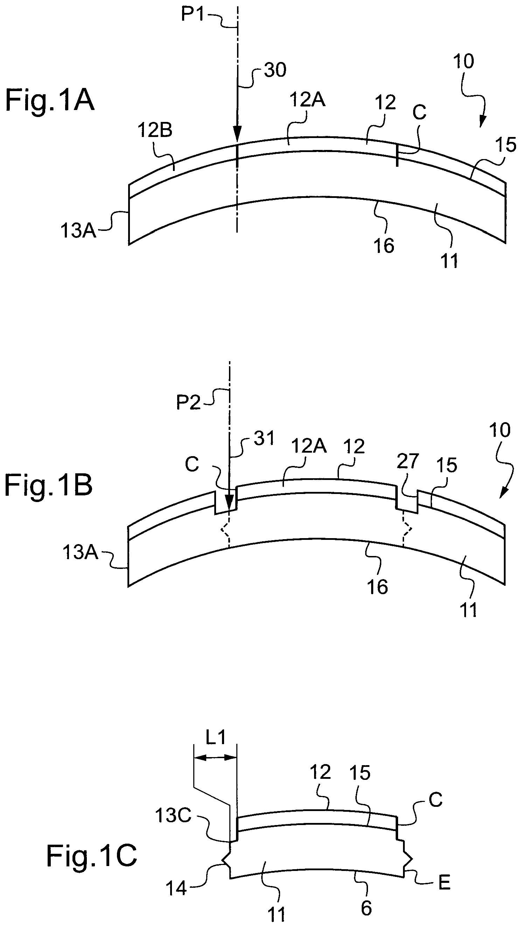

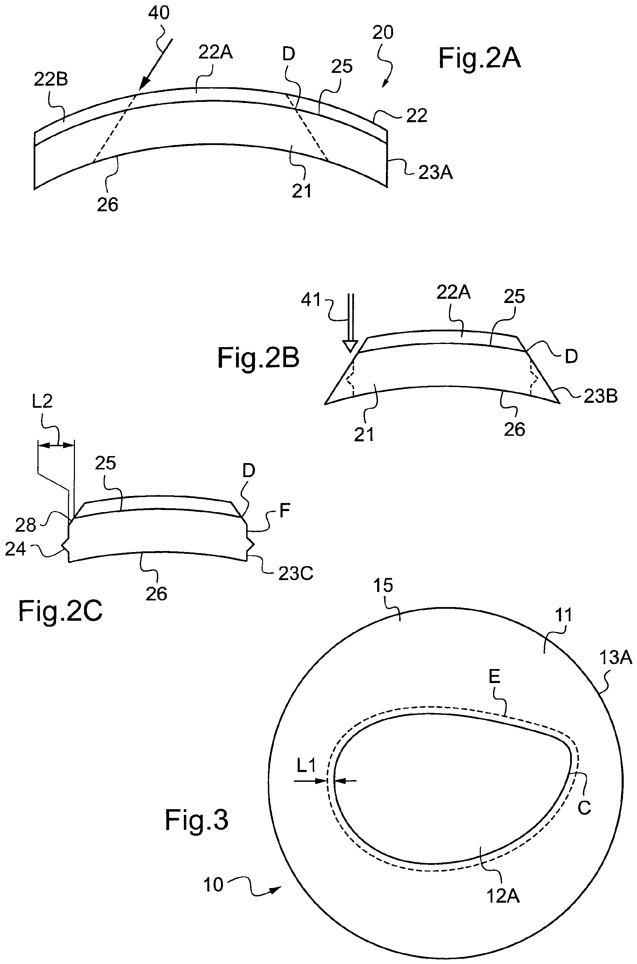

Sur les figures 1A, 1B, 1C ; 2A, 2B, 2C, on a représenté une lentille ophtalmique 10; 20 comportant un substrat 11; 21 recouvert d'un film 12; 22 de revêtement. Cette lentille ophtalmique 10; 20 peut être une lentille correctrice convergente, divergente et/ou torique ou une lentille non correctrice dont les faces optiquement utiles sont parallèles.

Le substrat 11; 21 est réalisé dans un premier matériau, par exemple en verre minéral ou en verre organique, c'est-à-dire en polymère.

Il présente deux faces principales 15, 16; 25, 26 correspondant aux deux faces principales de la lentille ophtalmique 10; 20.

Avant détourage selon le contour souhaité E; F de la lentille, qui correspond à la monture choisie par le porteur et sur laquelle la lentille 10; 20 est destinée à être montée, la tranche initiale 13A; 23A de la lentille est circulaire (figure 1A, 2A et 3). La lentille 10; 20 doit être détourée selon la forme du cercle correspondant de la monture de lunettes 10; 20, de manière à pouvoir être emboîtée dans ce dernier.

On entend par contour souhaité E; F l'intersection de la tranche de la lentille 10; 20 destinée à être insérée dans le cercle de la monture choisie et de la face utile sur laquelle le film 12; 22 est fixé,

Comme le montrent les figures 1C et 2C, la lentille est plus précisément détourée pour présenter sur sa tranche finale 13C; 23C une nervure d'emboîtement 14; 24 (ou biseau). La nervure d'emboîtement 14; 24 présente ici une section en forme de V, avec une arête de sommet qui court le long de la tranche finale 13C; 23C de la lentille 10; 20, et, de part et d'autre de cette arête de sommet, deux flancs avant et arrière.

En variante, la tranche de la lentille ophtalmique pourrait être détourée de manière à présenter un profil de forme différente, par exemple en créneau au en arc de cercle.

Le film 12; 22 de revêtement est réalisé dans un deuxième matériau distinct de celui dudit substrat 11; 21.

Ce deuxième matériau est par exemple un matériau plastique transparent. Ce matériau plastique transparent est par exemple un matériau polymère présentant des propriétés physico-chimique ou optique de bifréfringence, de polarisation, d'absorption dans certaines plages de longueur d'onde comme les ultra-violets ou certaines longueurs d'onde visible, de manière à donner une teinte particulière aux lentilles, ou encore de réflexion ou d'hydrophobie.

Le film 12; 22 peut également comporter une ou plusieurs couches de revêtement présentant par exemple, des propriétés anti-choc, anti-rayures, antireflet ou anti-salissures.

Le film 12; 22 est fixé sur l'une des faces principales du substrat 11; 21 qui est la face principale avant 15; 25 de ce substrat 11; 21, par exemple par collage.

De manière remarquable, grâce au procédé de détourage selon l'invention, on détoure la lentille 10; 20 complète à savoir le substrat 11; 21 avec le film 12; 22 fixé sur sa face avant 15; 25.

Ce procédé comporte plusieurs étapes de découpe distinctes.

Dans une première étape a), on découpe la lentille 10; 20 au moyen d'un premier outil 30; 40 (figures 1A et 2A) sur au moins l'épaisseur du film 12; 22 de revêtement fixé sur ledit substrat 11; 21, selon un contour intermédiaire appelé dans la suite contour réduit C; D représenté en pointillé sur les figures 1A et 2A et en trait plein sur la figure 3.

Ce contour réduit C; D est fermé et déterminé en fonction du contour souhaité E; F final de la lentille 10; 20 de manière à être inclus dans ce contour souhaité. Le contour réduit C; D présente donc des dimensions plus petites que celles du contour souhaité E; F de la lentille. En ce sens, on peut dire que le contour réduit C; D est réduit par rapport au contour souhaité. Ce contour réduit C; D est également, par définition, réduit par rapport au contour initial de la lentille avant détourage, qui correspond au contour de la tranche initiale 13A; 23A de la lentille 10; 20.

Ce contour réduit C; D délimite intérieurement une partie centrale 12A; 22A utile du film 12; 22 de revêtement et extérieurement une partie périphérique 12B; 22B. En d'autres termes, lors de l'étape a), la découpe épargne ladite partie centrale 12A; 22A du film de revêtement 12; 22 qui est située à l'intérieur du contour réduit 12A; 22A.

Dans une deuxième étape b), on taille par usinage le substrat 11; 21 de la lentille 10; 20 au moyen d'un second outil 31; 41, distinct du premier outil 30; 40, sans usiner la partie centrale 12A; 22A utile du film 12; 22 de revêtement, comme représenté en pointillé sur les figures 1B ,2B et 3.

Selon un premier mode de réalisation de l'invention représenté sur les figures 1A, 1B, 1C et 3, dans la première étape a), on découpe la lentille 10 sur l'épaisseur du film 12 de revêtement et sur une partie de l'épaisseur du substrat 11 de cette lentille.

Un sillon 27, creusé dans le film de revêtement et une partie de l'épaisseur du substrat de la lentille, est ainsi formé le long de la circonférence de la partie centrale du film de revêtement.

Cette partie de l'épaisseur du substrat est de préférence faible par rapport à l'épaisseur totale du substrat de la lentille. Elle correspond par exemple à une épaisseur inférieure ou égale à 30 pour cent de l'épaisseur totale du substrat.

Elle correspond de préférence à une épaisseur inférieure ou égale à un millimètre.

Le premier outil 30 utilisé pour réaliser cette étape et représenté schématiquement par une flèche 30 sur la figure 1A, est par exemple une fraise deux tailles ou un foret, l'un comme l'autre de petit diamètre. Ce petit diamètre est de préférence inférieur à 5 millimètres. Le premier outil 30 peut également être une pointe coupante.

On entend ici par diamètre de l'outil le diamètre de la surface de coupe de l'outil générée par une génératrice coupante ou une surface coupante de l'outil lors de sa rotation autour d'un axe de rotation de l'outil.

Ces outils présentent l'avantage de ne pas endommager le film 12 de revêtement. En particulier, ils ne provoquent pas de délaminage de ce film.

La tranche initiale 13A de la lentille 10 n'est pas modifiée par cette étape a).

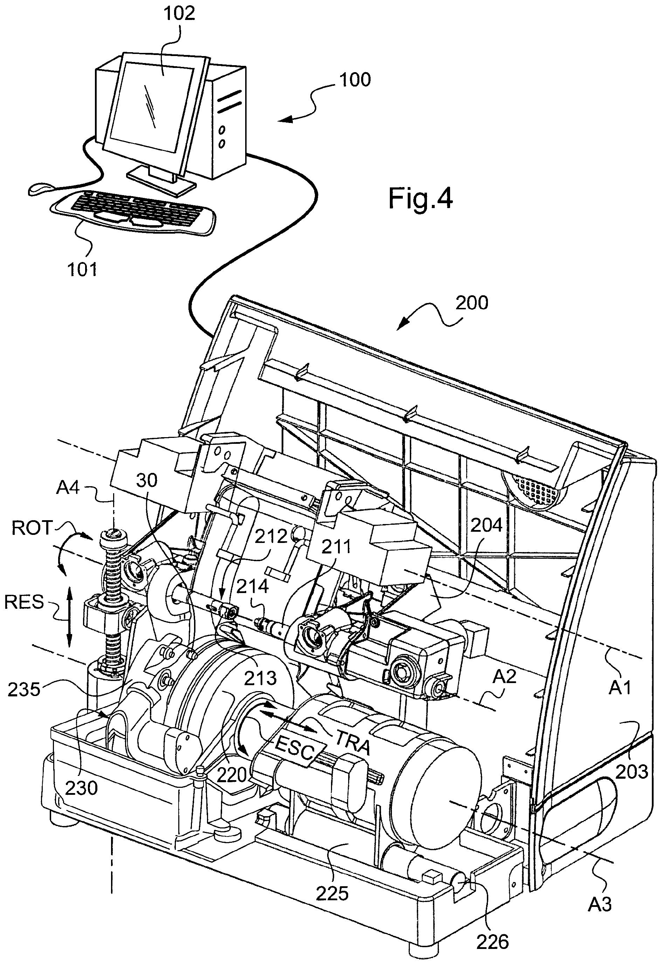

En pratique, l'opérateur place par exemple la lentille 10 dans un dispositif d'usinage 200 connu en lui-même, tel que celui décrit dans le document WO2008/043910. Un tel dispositif, tel qu'illustré sur la figure 4 comporte par exemple :
- une bascule 204 qui est montée pivotante autour d'un axe de référence A1, en pratique un axe horizontal, sur un châssis 203, et qui comporte des moyens de support de la lentille 10 permettant une mise en rotation motorisée de la lentille 10 autour d'un axe de blocage A2 sensiblement perpendiculaire au plan moyen de la lentille et parallèle à l'axe A1 ;
- au moins une meule 220, qui est calée en rotation sur un axe de meule A3 parallèle à l'axe de référence A1, et qui est elle aussi entraînée en rotation par un moteur ;
- un module de finition 235 qui est monté à rotation autour de l'axe de meule A3, et qui embarque ledit premier outil 30; 40 et éventuellement des moyens de perçage de la lentille ophtalmique 10.

Ce dispositif d'usinage 200 est piloté par un dispositif électronique et informatique 100. Le dispositif électronique et informatique 100 comprend des moyens d'acquisition et d'affichage de données 101 comportant typiquement un clavier 101 et un écran 102 adapté à l'affichage d'une interface graphique, des moyens de pilotage aptes à piloter les différents degrés de liberté du dispositif d'usinage 200 et un système d'exploitation associé à un applicatif logiciel adaptés à piloter ces différentes composants.

La bascule 204 est équipée d'un support de lentille formé par exemple par deux arbres 211, 212 de serrage et d'entraînement en rotation de la lentille 10 autour de un axe de blocage A2.

Ces deux arbres sont alignés l'un avec l'autre suivant l'axe de blocage A2 parallèle à l'axe de référence A1. Chacun des arbres 211, 212 possède une extrémité libre qui fait face à l'autre et qui est équipée d'un nez de blocage 213, 214 de la lentille ophtalmique 10.

Un premier 212 des deux arbres est fixe en translation suivant l'axe de blocage A2. Le second 211 des deux arbres est au contraire mobile en translation suivant l'axe de blocage A2 pour réaliser le serrage en compression axiale de la lentille ophtalmique 10 entre les deux nez de blocage 213, 214.

Les deux arbres 211, 212 sont entraînés en rotation de façon synchrone par un moteur (non représenté), via un mécanisme d'entraînement commun (non représenté) embarqué sur la bascule 204. Ce mécanisme commun d'entraînement synchrone en rotation est de type courant, connu en lui-même.

La rotation ROT des arbres 211, 212 est pilotée par le dispositif électronique et informatique 100.

Le dispositif d'usinage 200 comporte, d'autre part, un train de meules pour le débordage et le détourage de la lentille. Ce train de meules comprend la meule 220 de détourage et de biseautage, qui est calée en rotation sur l'axe de meules A3 parallèle à l'axe de blocage A2 et qui est elle aussi entraînée en rotation par un moteur spécifique. Cette meule 220 de détourage et de biseautage présente une tranche périphérique qui est globalement cylindrique autour de l'axe de meules A3 et qui porte deux gorges de biseautage de profils en V.

Le train de meules est rapporté sur un arbre commun s'étendant selon l'axe de meules A3 assurant son entraînement en rotation lors de l'opération de détourage et de biseautage de la lentille ophtalmique 10. Cet arbre commun, qui n'est pas visible sur les figures, est commandé en rotation par un moteur électrique piloté par le dispositif électronique et informatique 100.

Le train de meules est en outre mobile axialement en translation suivant l'axe de meules A3 et est commandé dans cette translation par une motorisation pilotée. En l'espèce, l'ensemble du train de meules, de son arbre et de son moteur est porté par un chariot 225 qui est lui-même monté sur des glissières 226 solidaires du châssis 203 pour coulisser suivant l'axe de blocage A2. Le mouvement de mobilité axiale du chariot 225 est appelé « transfert » et est noté TRA sur la figure 4. Ce transfert est piloté par le dispositif électronique et informatique 100.

Pour permettre un réglage dynamique de l'entraxe entre l'axe de meules A3 de la meule 220 de détourage et de biseautage et l'axe de blocage A2, on utilise la capacité de pivotement de la bascule 204 autour de l'axe de bascule A1.

Ce pivotement provoque en effet un déplacement, ici sensiblement vertical, de la lentille ophtalmique 10 enserrée entre les arbres 211, 212 qui rapproche ou éloigne la lentille de la meule 220 selon un axe de restitution A4. Cette mobilité, qui permet de restituer la forme de biseautage voulue et programmée dans le dispositif électronique et informatique 100, est appelée restitution et est notée RES sur la figure 4.

Le dispositif d'usinage 200 illustré par la figure 1 comporte de plus un bras d'usinage 230 pourvu du module de finition 235 qui porte des outils d'usinage supplémentaires pour le détourage et la finition de la lentille ophtalmique 10, et d'un socle qui raccorde le module de finition 235 au châssis 203 du dispositif d'usinage 200.

Le bras d'usinage 230 présente un degré de mobilité suivant une direction sensiblement transversale à l'axe de blocage A2 et à l'axe de la restitution A4. Ce degré de mobilité transversale est appelé escamotage et est noté ESC. En l'espèce, l'escamotage consiste en un pivotement du bras d'usinage 230 autour de l'axe de meules A3.

Le module de finition 235 présente, grâce aux mobilités de transfert TRA et d'escamotage ESC du bras d'usinage 230, une position réglable permettant aux outils d'usinage supplémentaires de pouvoir être rapprochés ou éloignés de la lentille bloquée par les arbres 211, 212.

En service, le dispositif électronique et informatique 100 pilote les mouvements relatifs de la bascule 204, de la lentille 10 et du module de finition 235 pour que le premier outil 30 découpe le film 12 selon le contour réduit C.

Ce contour réduit C est déterminé par exemple par le dispositif électronique et informatique 100 en fonction des caractéristiques de la monture choisie par le porteur et des caractéristiques morphologiques de ce porteur.

Le contour réduit C est également déterminé en fonction des caractéristiques de coupe du premier outil utilisé pour réaliser l'étape a), de telle sorte que le contour souhaité E pour la lentille 10 se situe au niveau du sillon 27 formé tout autour de ce contour réduit C dans la lentille.

Selon une variante, lors de l'étape a), la lentille est découpée uniquement sur l'épaisseur du film de revêtement. Le substrat de la lentille n'est alors pas découpé lors de cette étape.

L'opérateur usine ensuite dans l'étape b) le substrat 11 de la lentille 10, selon le contour souhaité E de la lentille, comme représenté sur la figure 1B. Comme précisé précédemment, le contour souhaité E correspond au contour du cercle de la monture dans laquelle la lentille est destinée à être montée.

Le deuxième outil 31, utilisé par l'opérateur pour réaliser cette étape b) et représenté schématiquement sur la figure 1B par une flèche 31, est par exemple la meule 220 de détourage et de biseautage de la figure 4. La meule 220 présente ici un grand diamètre, c'est-à-dire un diamètre voisin de ou supérieur à celui de la lentille. On pourrait toutefois utiliser une meule de moyen diamètre, par exemple de quelques centimètres. En variante, on peut aussi utiliser une fraise une taille de grand ou moyen diamètre.

Le contour souhaité E de la lentille est légèrement plus large que le contour réduit C du film 12 de revêtement, la partie centrale 12A du film 12 qui est collée sur le substrat 11 n'est pas affecté par cet usinage. On évite ainsi tout délaminage de cette partie centrale 12A du film 12.

Le contour réduit C du film 12 de revêtement épouse de préférence le contour souhaité E, comme représenté sur les figures 1C et 3. Le contour réduit C du film 12 est de préférence calculé pour que l'écart L1 (figures 1C et 3) entre ce contour réduit C du film 12 et le bord de la tranche détourée 13C de la lentille 10 soit inférieur ou égal au maximum à un millimètre (figure 1C) sur au moins 80 pour cent de la circonférence de la lentille 10 une fois détourée, de préférence sur toute sa circonférence.

Lors d'une étape c), l'opérateur procède en outre aux opérations de finitions de la lentille, par exemple aux opérations de biseautage, de rainurage et de chanfreinage du substrat 11 de la lentille 10.

Par exemple, lors de l'étape c), réalisée ici simultanément avec l'étape b), l'opérateur réalise sur la tranche finale 13C de la lentille 10 la nervure d'emboitement 14.

La partie périphérique 21 B du film 12 de revêtement est automatiquement éliminée à l'issue des deux étapes a) et b), comme représenté sur la figure 1C.

Dans le premier mode de réalisation décrit, les deux étapes de découpe sont chacune réalisées selon une génératrice ou un plan de coupe P1, P2 sensiblement parallèle à l'axe de blocage A2 de la lentille 10, c'est-à-dire perpendiculaire au plan moyen de la lentille.

En variante, on peut envisager que la génératrice ou le plan de coupe de chaque étape soit incliné par rapport à l'axe A2.

Pour cela, on peut envisager d'utiliser un outil dont l'axe de rotation est parallèle à l'axe de blocage de la lentille et dont la génératrice ou la surface coupante est incliné par rapport à cet axe de rotation, ou alors d'utiliser un outil dont la génératrice ou la surface coupante est parallèle par rapport à cet axe de rotation et dont l'axe de rotation est incliné par rapport à l'axe de blocage de la lentille.

Par exemple, la génératrice ou la surface coupante selon laquelle le premier outil découpe le film de revêtement peut être inclinée d'un angle compris entre 10 et 60 degrés par rapport à l'axe de blocage A2, de manière à ce que le diamètre de la partie centrale du film découpé augmente depuis la face externe du film vers la face du film collée sur la lentille ophtalmique.

Les étapes a) et b) sont alors réalisées de la manière décrite précédemment. On appelle alors le contour réduit du film le bord de la partie centrale du film en contact avec le substrat.

On peut également envisager de réaliser l'étape b) avant l'étape a). On usine alors lors de l'étape b) une épaisseur de substrat inférieure ou égale à l'épaisseur totale du substrat. On découpe ensuite le film et la partie du substrat qui n'a pas été découpée dans l'étape b) de manière à ce que les deux découpes se rejoignent. Le contour réduit du film peut ainsi se trouver au droit du contour souhaité de découpe de la lentille : il n'y a pas alors d'écart entre le bord de la tranche du substrat et le contour du film, ce qui améliore l'aspect esthétique de la face avant de la lentille.

Selon un deuxième mode de réalisation du procédé selon l'invention, représenté sur les figures 2A à 2C, lors de l'étape a), l'opérateur usine toute l'épaisseur du film 22 de revêtement et du substrat 21 de la lentille 20 comme représenté par des pointillés sur la figure 2A.

Plus précisément, lors de l'étape a), l'opérateur réalise un découpage oblique du film 22 de revêtement et du substrat 21, de manière à ce que la lentille 20 présente un diamètre qui s'élargit depuis la face avant de la lentille 20 portant le film 22 vers l'autre face de la lentille 20 après cette étape a) de découpage.

Ce découpage oblique est réalisé de manière à découper le film 22 selon son contour réduit D. On appelle ici le contour réduit D du film 22 le bord de la partie centrale 22A du film 22 en contact avec le substrat 21.

Pour cela, comme représenté sur la figure 2B, la lentille 20 est usinée de manière à ce que la tranche 23B de la lentille 20 après cette première étape a) forme un angle compris entre 30 et 60 degrés avec le plan moyen de la lentille 20.

Le premier outil 40 utilisé pour réaliser cette étape a) et représenté schématiquement sur la figure 2A par une flèche, est comme dans le premier mode de réalisation, une fraise deux tailles, un foret de petit diamètre, ou encore une pointe coupante, qui n'endommage pas le film 22 au cours de la découpe.

On peut, comme exposé dans le premier mode de réalisation, envisager, pour réaliser cette découpe oblique, d'utiliser un outil dont l'axe de rotation est parallèle à l'axe de blocage de la lentille et dont la génératrice ou la surface coupante est incliné par rapport à l'axe de rotation de l'outil, ou alors d'utiliser un outil dont la génératrice ou la surface coupante est parallèle par rapport à cet axe de rotation et dont l'axe de rotation est incliné par rapport à l'axe de blocage de la lentille.

En pratique, la lentille 20 est placée dans un dispositif de meulage semblable à celui décrit dans le premier mode de réalisation et représenté sur la figure 4. Le premier outil 40 est porté de la même façon par le module de finition de ce dispositif de meulage.

La partie périphérique 22B du film 22 de revêtement est automatiquement éliminée à l'issue de l'étape a), comme représenté sur la figure 2B.

La géométrie de la tranche 23B de la lentille 20 après l'étape a) est déterminée par le dispositif électronique et informatique du dispositif de meulage, en fonction du contour réduit D souhaité pour le film 22, de la forme de la monture choisie par le porteur et les caractéristiques morphologiques de ce porteur.

L'opérateur usine ensuite dans une étape b) au moins une partie du substrat 21 de la lentille 20, selon le contour souhaité F de la lentille, comme représenté sur la figure 2B. Comme précisé précédemment, le contour souhaité F correspond au contour du cercle de la monture dans laquelle la lentille est destinée à être montée.

L'étape b) est réalisée à l'aide du deuxième outil 41 représenté schématiquement par une flèche 41 sur la figure 2B. Ce deuxième outil 41 est par exemple une meule semblable à la meule 220 de détourage et de biseautage représentée sur la figure 4.

Dans l'étape b), la découpe est droite et la génératrice ou la surface coupante du deuxième outil utilisé est parallèle par rapport à l'axe de blocage de la lentille.

Le contour souhaité F s'étend à distance du contour réduit D du film 22. Ainsi, la partie centrale 22A du film 22 n'est pas usinée lors de l'étape b). On évite ainsi tout délaminage de cette partie centrale du film 22.

Le contour réduit D du film 12 de revêtement épouse de préférence le contour souhaité F de la lentille 20 détourée, représenté sur la figure 2C. L'écart L2 entre le contour réduit D du film 22 et le bord de la tranche finale 23C de la lentille 20 détourée est inférieur ou égal à un millimètre (figure 2C) sur au moins 80 pour cent de la circonférence de la lentille 20 détourée, et de préférence sur toute sa circonférence. L'aspect esthétique de la lentille est ainsi amélioré.

Comme dans le premier mode de réalisation, le dispositif électronique et informatique du dispositif de meulage détermine également la géométrie de la tranche finale 23C de la lentille. Il commande les mouvements relatifs de la bascule, du module de finition et de la lentille pour réaliser les deux étapes a) et b).

Comme dans le premier mode de réalisation, au cours d'une étape c), qui peut être réalisée en partie simultanément avec l'étape b), l'opérateur réalise avantageusement les opérations de finitions de la lentille 20. Ici, une nervure d'emboîtement 24 est réalisée le long de la tranche détourée 23C de la lentille 20. En outre, un chanfrein 28 reliant la tranche finale 23C et la face avant du film 22 est formé par la découpe oblique du film 22 et du substrat 21 lors de l'étape a). La finition de la lentille 20 est ainsi rapide et soignée.

On peut envisager en variante de réaliser l'étape b) avant l'étape a). Seule une partie de l'épaisseur du substrat de la lentille est alors usinée, de manière à ne pas endommager le film 22. Ensuite, l'opérateur réalise la découpe oblique du film et d'au moins la partie de l'épaisseur du substrat qui n'a pas été usinée précédemment.

L'utilisation d'outils différents, l'un étant choisi par exemple parmi la fraise deux tailles, le foret, la pointe coupante et l'autre étant par exemple une meule ou une fraise une taille, pour réaliser l'étape a) et l'étape b), permet notamment d'envisager la réalisation de ces deux étapes, au moins partiellement, de façon simultanée. Il suffit pour cela de commander les outils pour qu'ils parcourent la circonférence de la lentille successivement, l'un des deux outils présentant un léger retard par rapport à l'autre pour le travail d'un rayon donné de la lentille.

En variante, le film peut être fixé sur la face arrière du substrat. Le procédé n'est pas modifié. La face arrière de la lentille joue alors le rôle de la face avant de la lentille décrite précédemment.

On peut par exemple envisager que l'opérateur dépose de la colle le long de la circonférence de la partie centrale 12A du film 12 de revêtement, correspondant audit contour réduit C, afin d'empêcher tout décollement ultérieur de ce film après la réalisation de l'étape a).

Dans le cas où une partie de l'épaisseur du substrat de la lentille est découpée en plus du film de revêtement, un sillon creusé dans le substrat de la lentille est formé le long de la circonférence de la partie centrale du film de revêtement et la colle pénètre alors dans le sillon ainsi creusé.

## Revendications

1. Procédé de détourage d'une lentille ophtalmique (10; 20) de lunettes suivant un contour souhaité (E; F), la lentille (10; 20) présentant deux faces principales optiquement utiles et comportant, d'une part, un substrat (11; 21) réalisé dans un premier matériau et présentant deux faces principales (15, 16; 25, 26) correspondant aux deux faces principales de la lentille (10; 20) et, d'autre part, au moins un film de revêtement (12; 22) réalisé dans un matériau distinct de celui dudit substrat (11; 21), ledit film de revêtement (12; 22) étant préalablement fixé sur au moins une des faces principales (15, 16; 25, 26) du substrat (11;21), le procédé comporte les étapes suivantes :
a) une étape de découpe par usinage de la lentille (10; 20) au moyen d'un premier outil (30; 40) sur au moins l'épaisseur du film de revêtement (12; 22) préalablement fixé sur le substrat (11; 21), cette découpe délimitant intérieurement une partie centrale (12A; 22A) utile du film de revêtement (12; 22) présentant un contour réduit (C ; D), fermé et calculé en fonction dudit contour souhaité (E; F), et le procédé est **caractérisé par** les étapes suivantes:
b) une étape de taillage par usinage du chant du substrat (11; 21) suivant ledit contour souhaité (E; F), au moyen d'un second outil (31; 41), distinct du premier outil (30; 40), sans usinage de la partie centrale (12A; 22A) utile du film de revêtement (12, 22),
c) au moins une étape ultérieure de finition par usinage du chant du substrat (11; 21), sans usinage de la partie centrale (12A; 22A) utile du film de revêtement (12; 22).

2. Procédé selon l'une des revendications précédentes, dans lequel, lors de l'étape c), on procède à des opérations de biseautage et/ou de rainurage et/ou de chanfreinage du substrat (11; 21) de la lentille (10; 20).

3. Procédé selon l'une des revendications précédentes, dans lequel on réalise les étapes a) et b) de manière séquentielle, l'une après l'autre, dans un ordre quelconque.

4. Procédé selon l'une des revendications 1 et 2, dans lequel on réalise au moins une partie des étapes a) et b) simultanément.

5. Procédé selon l'une des revendications précédentes, dans lequel on réalise l'étape a) au moyen d'une fraise.

6. Procédé selon l'une des revendications précédentes, dans lequel on réalise l'étape a) au moyen d'une pointe coupante.

7. Procédé selon l'une des revendications précédentes, dans lequel on réalise l'étape b) au moyen d'une meule.

8. Procédé selon l'une des revendications précédentes, dans lequel, lors de l'étape a), on usine ledit substrat (11; 21) de la lentille (10; 20) sur au moins une partie de son épaisseur.

9. Procédé selon la revendication précédente, dans lequel, lors de l'étape a), le substrat (11) de la lentille est usiné sur une partie de son épaisseur inférieure ou égale à 30 pour cent de l'épaisseur totale dudit substrat (11).

10. Procédé selon l'une des revendications 8 et 9, dans lequel, lors de l'étape a), on réalise un découpage oblique du film (22) de revêtement et d'au moins une partie du substrat (21).

11. Procédé selon la revendication 10, dans lequel ledit découpage oblique est réalisé sur l'épaisseur totale du film (22) de revêtement et du substrat (21).

12. Procédé selon l'une des revendications précédentes, dans lequel on découpe le film (12; 22) de revêtement et le substrat (11; 21) de la lentille de telle sorte qu'au moins 80 pour cent du contour (C; D) de la partie centrale (12A; 22A) utile du film (12; 22) de revêtement soit distant d'au plus 1 millimètre du bord de la face de la lentille (10; 20) sur laquelle est fixé le film (12; 22) de revêtement.

## Patentansprüche

1. Verfahren zum Schneiden einer Brillenglaslinse (10; 20) entlang einer gewünschten Kontur (E; F), wobei die Linse (10; 20) zwei optisch nützliche Hauptflächen aufweist und einerseits ein Substrat (11; 21), das in einem ersten Material realisiert ist und zwei Hauptflächen (15, 16; 25, 26) aufweist, die den zwei Hauptflächen der Linse (10; 20) entsprechen, und andererseits mindestens einen Beschichtungsfilm (12; 22) umfasst, der in einem Material realisiert ist, der von demjenigen des Substrats (11; 21) verschieden ist, wobei der Beschichtungsfilm (12; 22) zuvor auf mindestens einer der Hauptflächen (15, 16; 25, 26) des Substrats (11; 21) befestigt wurde, wobei das Verfahren die folgenden Schritte umfasst:
a) einen Schritt des Schneidens durch spanende Bearbeitung der Linse (10; 20) mittels eines ersten Werkzeugs (30; 40) über mindestens die Dicke des Beschichtungsfilms (12; 22), der zuvor auf dem Substrat (11; 21) befestigt wurde, wobei der Schnitt innen einen nützlichen zentralen Teil (12A; 22A) des Beschichtungsfilms (12; 22) begrenzt, der eine reduzierte Kontur (C; D) aufweist, die geschlossen ist und abhängig von der gewünschten Kontur (E; F) berechnet wird, und das Verfahren durch die folgenden Schritte gekennzeichnet ist:
b) einen Schritt des Beschneidens der Schmalseite des Substrats (11; 21) durch spanende Bearbeitung entlang der gewünschten Kontur (E; F) mittels eines zweiten Werkzeugs (31; 41), das vom ersten Werkzeug (30; 40) verschieden ist, ohne spanende Bearbeitung des nützlichen zentralen Teils (12A; 22A) des Beschichtungsfilms (12, 22),
c) mindestens einen nachträglichen Schritt der Endbearbeitung durch spanende Bearbeitung der Schmalseite des Substrats (11; 21) ohne spanende Bearbeitung des nützlichen zentralen Teils (12A; 22A) des Beschichtungsfilms (12; 22).

2. Verfahren nach einem der vorhergehenden Ansprüche, wobei bei Schritt c) Arbeitsgänge des Abschrägens und/oder des Einkerbens und/oder des Abfasens des Substrats (11; 21) der Linse (10; 20) durchgeführt werden.

3. Verfahren nach einem der vorhergehenden Ansprüche, wobei die Schritte a) und b) sequentiell einer nach dem anderen in beliebiger Reihenfolge durchgeführt werden.

4. Verfahren nach einem der Ansprüche 1 und 2, wobei mindestens ein Teil der Schritte a) und b) gleichzeitig durchgeführt wird.

5. Verfahren nach einem der vorhergehenden Ansprüche, wobei Schritt a) mittels einer Fräse durchgeführt wird.

6. Verfahren nach einem der vorhergehenden Ansprüche, wobei Schritt a) mittels einer Schneidspitze durchgeführt wird.

7. Verfahren nach einem der vorhergehenden Ansprüche, wobei Schritt b) mittels eines Schleifkörpers durchgeführt wird.

8. Verfahren nach einem der vorhergehenden Ansprüche, wobei in Schritt a) das Substrat (11; 21) der Linse (10; 20) auf mindestens einem Teil seiner Dicke spanend bearbeitet wird.

9. Verfahren nach dem vorhergehenden Anspruch, wobei in Schritt a) das Substrat (11) der Linse auf einem Teil seiner Dicke spanend bearbeitet wird, die kleiner oder gleich 30 % der Gesamtdicke des Substrats (11) ist.

10. Verfahren nach einem der Ansprüche 8 und 9, wobei in Schritt a) ein schräger Schnitt des Beschichtungsfilms (22) und mindestens eines Teils des Substrats (21) durchgeführt wird.

11. Verfahren nach Anspruch 10, wobei der schräge Schnitt über die Gesamtdicke des Beschichtungsfilms (22) und des Substrats (21) durchgeführt wird.

12. Verfahren nach einem der vorhergehenden Ansprüche, wobei der Beschichtungsfilm (12; 22) und das Substrat (11; 21) der Linse so geschnitten werden, dass mindestens 80 % der Kontur (C; D) des nützlichen zentralen Teils (12A; 22A) des Beschichtungsfilms (12; 22) höchstens 1 Millimeter vom Rand der Fläche der Linse (10; 20) entfernt sind, auf der der Beschichtungsfilm (12; 22) befestigt ist.

## Claims

1. A method of shaping an ophthalmic eyeglass lens (10; 20) to have a desired outline (E; F), the lens (10; 20) presenting two main optical working faces and comprising firstly a substrate (11; 21) made of a first material and presenting two main faces (15, 16; 25, 26) corresponding to the two main faces of the lens (10; 20), and secondly at least one coating film (12; 22) made of a material distinct from that of said substrate (11; 21), said coating film (12; 22) being previously secured on at least one of the main faces (15, 16; 25, 26) of the substrate (11; 21), the method comprising:
a) a step of cutting the lens (10; 20) by machining it with a first tool (30; 40) over at least the thickness of the coating film (12; 22) previously secured on the substrate (11; 21), this cutting defining internally a working central portion (12A; 22A) of the coating film (12; 22) that presents a reduced outline (C; D) that is closed and determined as a function of said desired outline (E; F);
the process being **characterized in that** is also comprises the following steps:
b) a step of trimming the edge face of the substrate (11; 21) along said desired outline (E; F) by machining by means of a second tool (31; 41) distinct from the first tool (30; 40), without machining the working central portion (12A; 22A) of the coating film (12; 22); and
c) at least one subsequent step of finishing the edge face of the substrate (11; 21) by machining without machining the working central portion (12A; 22A) of the coating film (12; 22).

2. The method according to the preceding claim, wherein during step c), beveling and/or grooving and/or chamfering operations are performed on the substrate (11; 21) of the lens (10; 20).

3. The method according to either preceding claim, wherein steps a) and b) are performed sequentially, one after the other, in either order.

4. The method according to claim 1 or claim 2, wherein steps a) and b) are performed simultaneously, at least in part.

5. The method according to any preceding claim, wherein step a) is performed by means of a cutter.

6. The method according to any preceding claim, wherein step a) is performed by means of a sharp point.

7. The method according to any preceding claim, wherein step b) is performed by means of a grindwheel.

8. The method according to any preceding claim, wherein during step a), said substrate (11; 21) of the lens (10; 20) is machined over at least a fraction of its thickness.

9. The method according to the preceding claim, wherein during step a), the substrate (11) of the lens is machined over a fraction of its thickness that is less than or equal to 30 percent of the total thickness of said substrate (11).

10. The method according to claim 8 or claim 9 wherein, during step a), the coating film (22) and at least a portion of the substrate (21) are cut obliquely.

11. The method according to claim 10, wherein said oblique cutting is performed through the total thickness of the coating film (22) and of the substrate (21).

12. The method according to any preceding claim, wherein the coating film (12; 22) and the substrate (11; 21) of the lens are cut in such a manner that at least 80 percent of the outline (C; D) of the working central portion (12A; 22A) of the coating film (12; 22) is spaced apart from the edge of the face of the lens (10; 20) on which the coating film (12; 22) is secured by no more than 1 millimeter.
